# EUROPEAN PATENT APPLICATION

(11) **EP 1 655 198 A1**
(43) Date of publication of application: **10.05.2006**
(21) Application number: 03817373.8
(22) Date of filing: 13.08.2003
(51) Int. Cl.: B62D 1/04

(54) **STEERING WHEEL DEVICE**

(71) Applicant: MATSUSHITA ELECTRIC INDUSTRIAL CO., LTD., Kadoma-shi, Osaka 571-8501 (JP)
(72) Inventor: IISAKA, Atsushi, Katano-shi, Osaka 576-0021 (JP); SAKAMOTO, Kiyomi, Ikoma-shi, Nara 630-0212 (JP); YAMASHITA, Atsushi, Osaka-shi, Osaka 545-0043 (JP); UEDA, Shigeki, Yamatokoriyama-shi, Nara 639-1055 (JP); OGINO, Hiroyuki, Nara-shi, Nara 630-8024 (JP)
(74) Representative: Pautex Schneider, Nicole Véronique
(86) International application number: PCT/JP2003/010285
(87) International publication number: WO 2005/016721

(57) **Abstract**

In a steering wheel, when a driver rotates a rotating section 126 in either direction, a protruding section 1241 bends an elastic member 1218b, and a tip of the elastic member 1218b depresses a button of a switch 1217b. As a result, the switch 1217b outputs a signal. Also, the reaction force produced as soon as the button is depressed causes a force in the reverse direction to be exerted on a hand of the driver. Thus, the driver can sense that the button is depressed.

## Description

### TECHNICAL FIELD

The present invention relates to steering wheels, and more particularly, relates to a steering wheel provided with a controller for operating a vehicle-mounted device.

### BACKGROUND ART

A steering wheel is a man/machine interface used in a vehicle steering system, and is disclosed in Japanese Laid-Open Patent Publication No. 2000-182464 (hereinafter referred to as document 1) and Japanese Laid-Open Utility Model Publication No.S61-159242 (hereinafter referred to as document 2), for example.

The steering wheel as disclosed in document 1 includes a wheel, a piezoelectric cable, and a controller. The wheel is a circular frame gripped by a driver for steering a vehicle while driving. The piezoelectric cable is laid along the wheel, and outputs a signal when pressure is placed thereon. The controller generates a control signal for controlling a vehicle-mounted device based on an output signal from the piezoelectric cable.

Also, the steering wheel as disclosed in document 2 includes a wheel and an anisotropic pressure-sensitive switch. The wheel is a circular frame, and a core thereof is covered with a compression-moldable outer covering. The anisotropic pressure-sensitive switch is embedded within the outer covering. When the driver grips a portion of the wheel in which the anisotropic pressure-sensitive switch is embedded, it produces torsional stress in the core. Such torsional stress causes the anisotropic pressure-sensitive switch to close, and a signal is outputted therefrom.

However, since the piezoelectric cable and the anisotropic pressure-sensitive switch, both of which are covered with the outer covering, are adopted in the steering wheels disclosed in documents 1 and 2, respectively, it is difficult for the driver to determine how much strength he/she has to exert on the outer covering for operating the vehicle-mounted device.

Therefore, an object of the present invention is to provide a steering wheel provided with a controller enabling easier operation of a vehicle-mounted device.

### DISCLOSURE OF THE INVENTION

To achieve the above object, a steering wheel according to the present invention comprises a wheel section and a controller mounted on the wheel section for controlling a predetermined device. Here, the controller includes a rotating section operable to rotate about a predetermined rotational axis and at least one switch for outputting a signal in response to a rotation of the rotating section.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic diagram illustrating a steering wheel 1 according to one embodiment of the present invention.
FIG. 2 is a schematic diagram illustrating a three-dimensional coordinate system used in the descriptions of the steering wheel 1 as illustrated in FIG. 1.
FIG. 3A is a schematic diagram illustrating a vertical cross-sectional view of a portion of a wheel section 11 as illustrated in FIG. 1 taken along a zx plane.
FIG. 3B is a partial transverse sectional view of a portion of the wheel section 11 as illustrated in FIG. 1 taken along an xy plane.
FIG. 4 is an exploded perspective view of a controller 12 as illustrated in FIG. 1.
FIG. 5A is a side view of a first supporting member 121 as illustrated in FIG. 4.
FIG. 5B is a bottom view of the first supporting member 121 seen from the direction of an arrow L1 of FIG. 5A.
FIG. 5C is an elevational view of the first supporting member 121 seen from the direction of an arrow L2 of FIG. 5B.
FIG. 5D is a cross-sectional view of the first supporting member 121 taken along a plane P2 as illustrated in FIG. 5B and seen from the direction of the arrow L2.
FIGS. 6A and 6B are schematic diagrams each illustrating the above-stated switch 1217a and elastic member 1218a.
FIG. 7A is a left side view of a second supporting member 122 as illustrated in FIG. 4.
FIG. 7B is a top view of the second supporting member 122 seen from the direction of an arrow L3 of FIG. 7A.
FIG. 7C is an elevational view of the second supporting member 122 seen from the direction of an arrow L4 of FIG. 7B.
FIG. 8A is a side view of a first rotating member 123 as illustrated in FIG. 4.
FIG. 8B is a top view of the first rotating member 123 seen from the direction of an arrow L5 of FIG. 8A.
FIG. 8C is an elevational view of the first rotating member 123 seen from the direction of an arrow L6 of FIG. 8B.
FIG. 9A is a side view of a second rotating member 124 as illustrated in FIG. 4.
FIG. 9B is a cross-sectional view of the second rotating member 124 taken along a plane P3 parallel to the xy plane including a central axis C2 as illustrated in FIG. 9A and seen from an arrow L7 as illustrated in FIG. 9A.
FIG. 9C is an elevational view of the second rotating member 124 seen from the direction of an arrow L8 as illustrated in FIG. 9B.
FIG. 9D is an enlarged view of an area including a protruding member 1241 as illustrated in FIG. 9C.
FIG. 10 is a schematic diagram illustrating a supporting section 125 composing the controller 12 as illustrated in FIG. 1.
FIG. 11 is a schematic diagram illustrating a rotating section 126 composing the controller 12 as illustrated in FIG. 1.
FIG. 12A is a schematic diagram illustrating the rotating section 126 as illustrated in FIG. 11 is in the neutral position.
FIGS. 12B and 12C are schematic diagrams illustrating the rotating section 126 of FIG. 11 being rotated in the normal and reverse directions, respectively.
FIG. 13 is a block diagram illustrating the structure of a volume adjusting system to which the steering wheel 1 is applied.
FIG. 14 is a flowchart showing an operation of an MPU 14 as illustrated in FIG. 13.
FIG. 15 is a schematic diagram showing an exemplary alternative of the controller 12 as illustrated in FIG. 1.

### BEST MODE FOR CARRYING OUT THE INVENTION

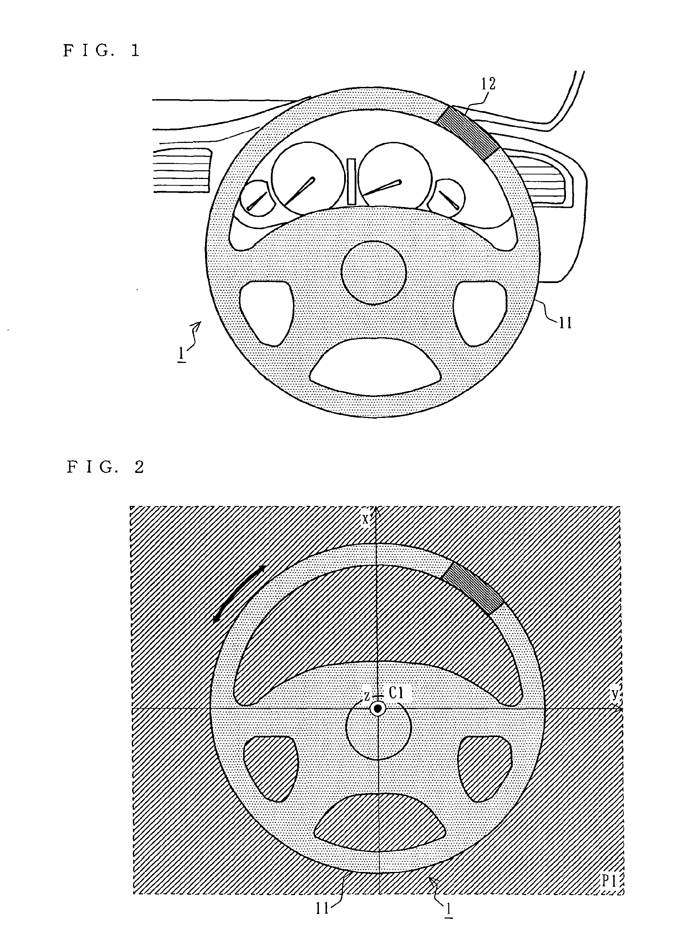

FIG. 1 is a schematic diagram illustrating a steering wheel 1 according to one embodiment of the present invention. The steering wheel 1 is aman/machine interface used in a vehicle steering system, and includes a wheel section 11 and a controller 12.

The wheel section 11 is a substantially circular frame gripped by a driver for steering a vehicle while driving. Here, FIG. 2 is a schematic diagram illustrating a three-dimensional coordinate system used in the descriptions of the steering wheel 1. In FIG. 2, the wheel section 11 rotates about an axis C1 in a plane P1 (a portion indicated by a hatched line extending down and to the left). In the three-dimensional coordinate system, a z-axis passes through a center C1 of the rotation of the wheel section 11, and intersects at right angles with the plane P1 . Also, an x-axis, which is included in the plane P1, passes through the upper and lower ends of the wheel section 11 when the vehicle is traveling in a straight line, and intersects at right angles with the z-axis. Further, a y-axis intersects at right angles with the z- and x-axes. Note that, in the present embodiment, the plane P1 is included in an xy plane.

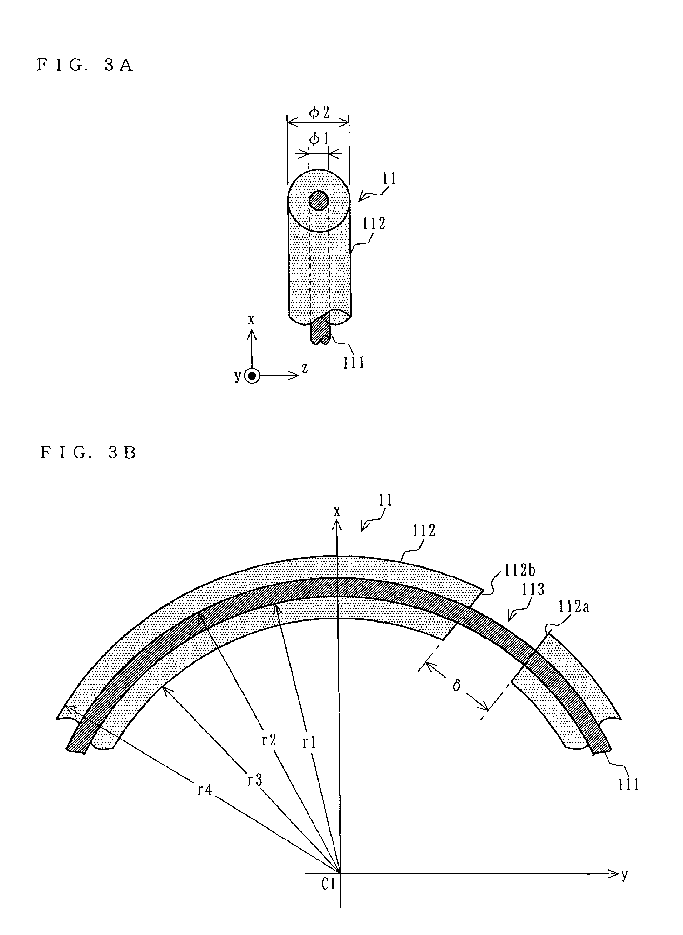

Here, FIG. 3A is a schematic diagram illustrating a vertical cross-sectional view of a portion of the wheel section 11 of FIG. 1 taken along a zx plane. Also, FIG. 3B is a partial transverse sectional view of a portion of the wheel section 11 of FIG. 1 taken along the xy plane. Hereinafter, with reference to FIGS. 3A and 3B, a specific structure of the wheel section 11 will be described. In FIGS. 3A and 3B, the wheel section 11 includes a core 111 and an outer covering 112.

The core 111 is made by die-casting, for example, and the outer shape thereof is substantially circular. For convenience of description, assume that the distances from the center C1 to the innermost and outermost circumferences of the core 111 are substantially r1 and r2, respectively (see FIG. 3B). Further, assume that a shape of the vertical cross-section of the core 111 is circular and the diameter thereof is substantially φ1 (see FIG. 3A).

The outer covering 112 is made of urethane, for example, and covers the entirety of the core 111 with the exception of a portion 113 (hereinafter referred to as a mounting space) of the core 111 on which the controller 12 is mounted. Here, for convenience of description, assume that the distances from the center C1 to the innermost and outermost circumferences of the outer covering 112 are substantially r3 and r4, respectively (see FIG. 3B). Further, assume that a shape of the vertical cross-section of the outer covering 112 is circular and the diameter thereof is substantially φ 2 (see FIG. 3A). Still further, assume that the above-stated plane P1, which is included in the xy plane, includes a center point of each vertical cross-section of the core 111.

Note that, in general, the outer covering 112 has an outer shape allowing the driver to easily grip the wheel section 11. In the present embodiment, however, for the sake of convenience, assume that the outer covering 112 is C-shaped with a gap, which corresponds to the above-stated mounting space 113 . The mounting space 113 is formed between two end faces 112a and 112b of the outer covering 112. In the present embodiment, assume that the two end faces 112a and 112b are preferably parallel with each other and are separated from each other by a distance δ.

Also, it is preferable that the mounting space 113 be formed at a position shifted from a portion of the wheel section 11 typically gripped by a driver to the x-axis along the outer circumference of the wheel section 11. As a result, it is possible to make it difficult for the driver to touch the controller 12 while driving. Note that, in FIG. 3B, the mounting space 113 is formed on the right side of the x-axis, but it may be formed on the left side thereof.

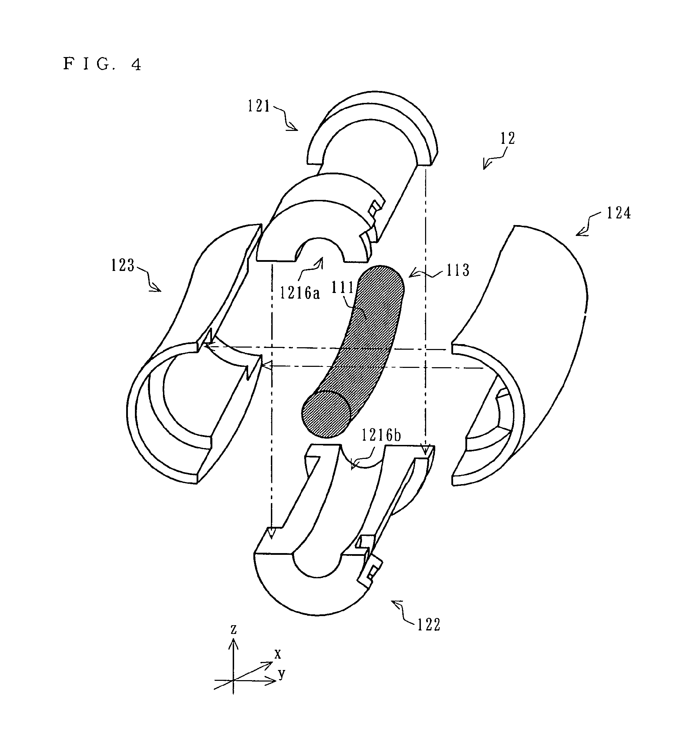

The controller 12 is a switch unit for operating the vehicle-mounted device, and is mounted on the above-stated mounting space 113. Here, FIG. 4 is an exploded perspective view of the controller 12 as illustrated in FIG. 1. In FIG. 4, the controller 12 includes a first supporting member 121, a second supporting member 122, a first rotating member 123, and a second rotating member 124.

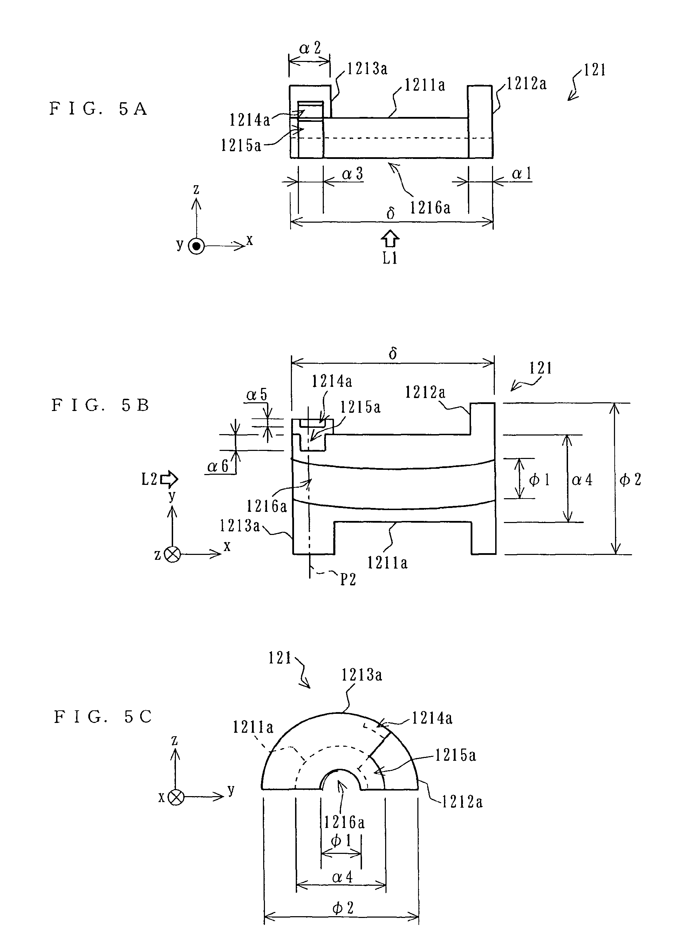

Here, FIG. 5A is a side view of the first supporting member 121. FIG. 5B is a bottom view of the first supporting member 121 seen from the direction of an arrow L1 of FIG. 5A. FIG. 5C is an elevational view of the first supporting member 121 seen from the direction of an arrow L2 of FIG. 5B. Further, FIG. 5D is a cross-sectional view of the first supporting member 121 taken along a plane P2 as illustrated in FIG. 5B and seen from the direction of thearrowL2. Hereinafter, with reference to the above-stated FIGS. 5A to 5D, a shape of the first supporting member 121 will be briefly described. In FIGS. 5A to 5D, the first supporting member 121 includes a main unit 1211a, a first rib 1212a, and a second rib 1213a. A shape of the main unit 1211a can be briefly described as follows: That is, the main unit 1211a has a half-cylindrical shape obtained by cutting a cylindrical member with a bottom diameter of α4 (see FIGS. 5B and 5C in particular) and a height of δ (see FIG. 5B in particular) along its central axis. Note that, for the sake of convenience, the central axis of the above-stated cylindrical member is hereinafter denoted by a reference character C2 (see FIG. 5D). In the above-described main unit 1211a, a recess 1216a capable of accommodating a portion of the core 111 is formed on the rectangular bottom. Here, as illustrated in FIG. 5C, each end of the recess 1216a has a semicircular shape, and the diameter thereof is φ1.

The first rib 1212a is briefly described as a member protruding preferably perpendicularly from one end of a rounded surface of the main unit 1211a and having a half-ringed shape with an outer diameter of φ2 (see FIG. 5B in particular) and a thickness of α1 (see FIG. 5A in particular).

Briefly speaking, the second rib 1213a protrudes preferably perpendicularly from another end of the rounded surface of the main unit 1211a, and has an asymmetrical half-ringed shape with an outer diameter of φ2 and a thickness of α2 (see FIG. 5A in particular). Specifically, as illustrated in FIG. 5D in particular, the second rib 1213a is formed within an angle of θ 1 to 180 degrees with respect to the bottom surface of the main unit 1211a.

Also, a space 1215a (hereinafter referred to as an accommodation space) for accommodating an elastic member 1218a, which will be described below, is formed at another end of the main unit 1211a. Specifically, the accommodation space 1215a is a recess formed in the main unit 1211a. The accommodation space 1215a is formed within an angle of 0 to θ1 degrees with respect to the bottom surface of the main unit 1211a (see FIG. 5D in particular). Also, the accommodation space 1215a has a width of α3 as illustrated in FIG. 5A and a depth of α6 as illustrated in FIG. 5B. Further, as illustrated in FIG. 5A, one side of the accommodation space 1215a is separated by approximately a distance (α2-α3)/2 from the semicircular surface of another end of the main unit 1211a.

Also, in FIGS. 5A to 5D, a space 1214a (hereinafter referred to as an installation space) for installing a switch 1217a, which will be described below, is formed on the upper end of the second rib 1213a. Specifically, the installation space 1214a is an approximately rectangular-prism recess formed on the asymmetrical half-ringed surface of the second rib 1213a. As illustrated in FIG. 5D in particular, the installation space 1214a is formed within an angle of θ1 to θ2 degrees with respect to the bottom surface of the main unit 1211a. Further, in the present embodiment, for illustrative purposes, the installation space 1214a has a width of α3, which is substantially the same as that of the accommodation space 1215a (see FIG.5A in particular). Still further, the installation space 1214a is α5 in depth (see FIG. 5B in particular). Also, as is the case with the accommodation space 1215a, one side of the installation space 1214a is separated by approximately a distance (α2-α3)/2 from the semicircular surface of another end of the main unit 1211a (see FIG. 5A in particular).

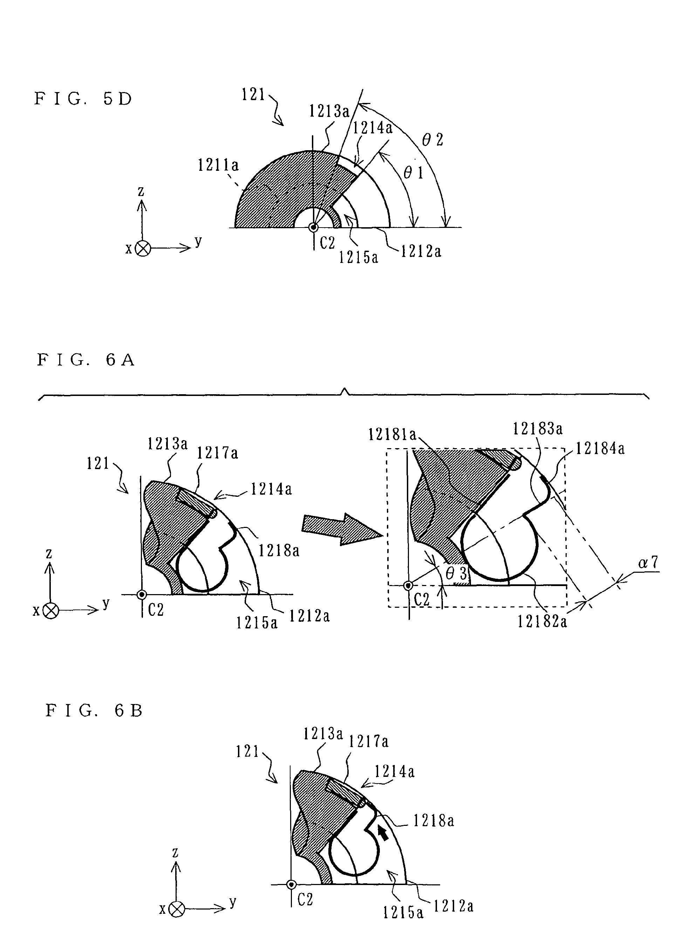

Also, the first supporting member 121 further includes the switch 1217a and the elastic member 1218a. Here, FIGS. 6A and 6B are schematic diagrams each illustrating the above-stated switch 1217a and elastic member 1218a. In FIG. 6A, the switch 1217a is fixed in the installation space 1214a. The above-stated switch 1217a generates a predetermined signal in response to the depression of a button thereof.

Also, the elastic member 1218a is fixed in the accommodation space 1215a, and is shaped so as to be capable of depressing the button of the switch 1217a, as illustrated in FIG. 6B, by a force exerted by a protruding member 1241 (not shown) of the second rotating member 124, which will be described further below. More specifically, as illustrated in FIG. 6A, the elastic member 1218a includes at least a fixing section 12181a, a ring section 12182a, a connection section 12183a, and a protruding section 12184a. The fixing section 12181a is fixed to the upper end of the second rib 1213a. The ring section 12182a has elasticity, and one end thereof is connected to the fixing section 12181a. The connection section 12183a is approximately rectangular in shape, and one end thereof is connected to another end of the ring section 12182a. Here, the connection section 12183a is substantially included in a plane generated as a result of a rotation of the bottom surface of the main unit 1211a θ3 degrees about the central axis C2 when no force is externally exerted. Here, θ3 is selected so as to be a value that is greater than at least an angle of 0 degrees and is smaller than an angle of θ1 degrees. Also, α7 is selected as the length of the connection section 12183a. Also, the protruding section 12184a is a member that is capable of depressing the switch 1217a and is protruding, for example, perpendicularly from another end of the connection section 12183a.

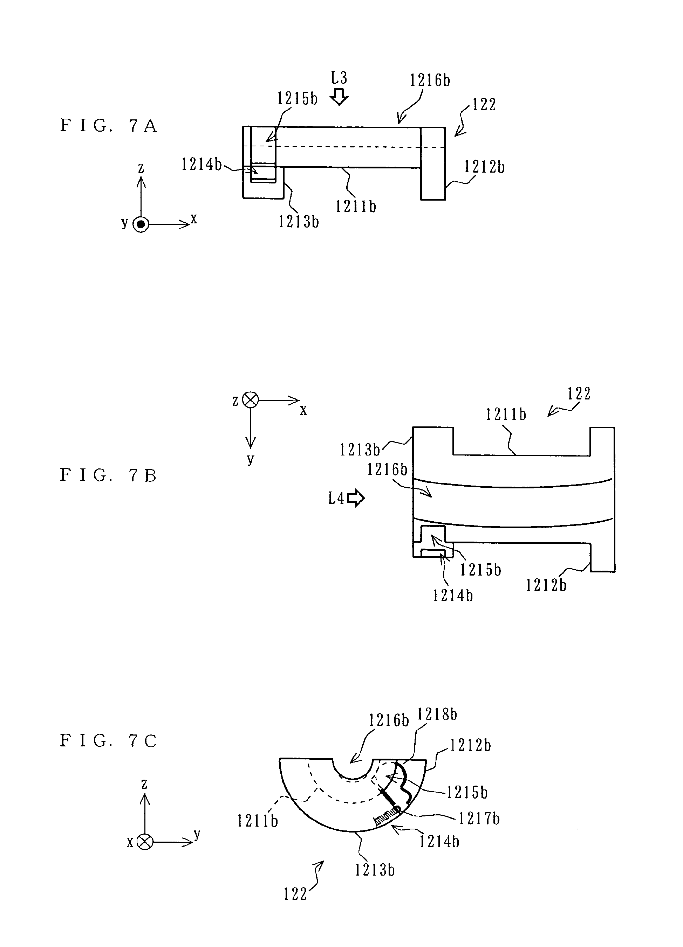

FIG. 7A is a left side view of the second supporting member 122. FIG. 7B is a top view of the second supporting member 122 seen from the direction of an arrow L3 of FIG. 7A. FIG. 7C is an elevational view of the second supporting member 122 seen from the direction of an arrow L4 of FIG. 7B. In FIGS. 7A to 7C, the second supporting member 122 has a shape symmetric to the first supporting member 121 with respect to the xy plane. Therefore, any component elements that have similar counterparts in the first supporting member 121 will be denoted by the same names and the same reference numerals as those used therein, and the description thereof is omitted. However, in FIGS. 7A to 7C, for the sake of clarification, a subscript "b" is added to the end of each of the reference numerals of the components elements of the second supporting member 122. For example, a switch of the second supporting member 122 is denoted as a switch 1217b.

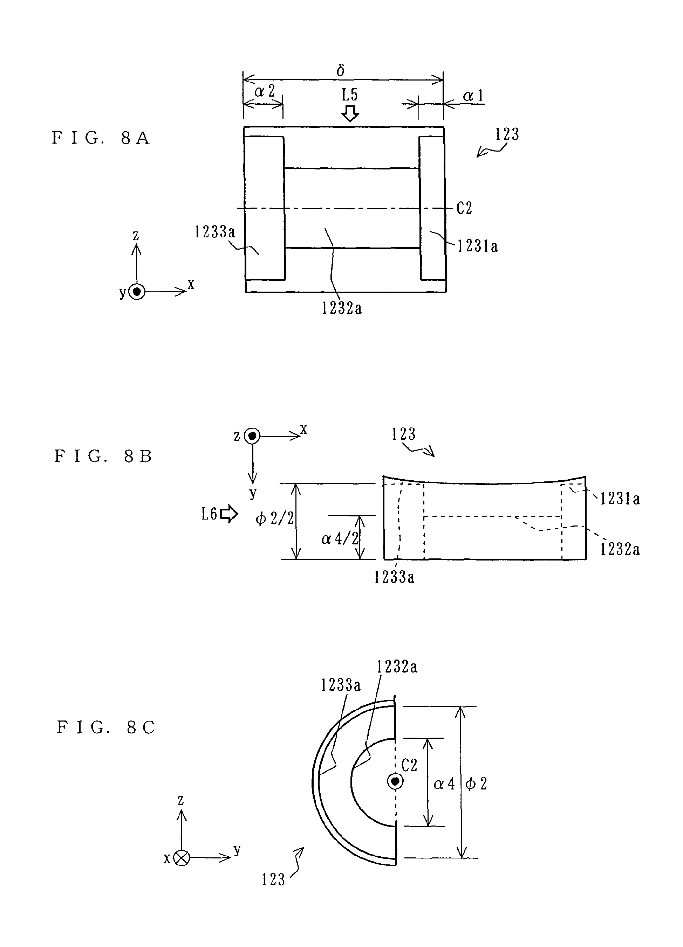

FIG. 8A is a side view of the first rotating member 123. FIG. 8B is a top view of the first rotating member 123 seen from the direction of an arrow L5 of FIG. 8A. FIG. 8C is an elevational view of the first rotating member 123 seen from the direction of an arrow L6 of FIG. 8B. Hereinafter, with reference to FIGS. 8A to 8C, a shape of the first rotating member 123 will be described. In FIGS. 8A to 8C, the first rotating member 123 has a substantially half tube shape, and includes a first arc-shaped surface 1231a, a second arc-shaped surface 1232a, and a third arc-shaped surface 1233a. A shape of the first rotating member 123 can be briefly described as follows: First, a cylindrical arc-shaped member is obtained by cutting a circular member whose inner and outer circumferences are respectively r3 and r4 in radius and are substantially the same as those of the wheel section 11 at two parallel planes separated from each other by a distance δ. The resultant cylindrical arc-shaped member is cut along a vertical plane passing through the centers of the two end faces, thereby obtaining halved cylindrical arc-shaped members. One of the halved cylindrical arc-shaped members is processed for forming the first arc-shaped surface 1231a, the second arc-shaped surface 1232a, and the third arc-shaped surface 1233a. As a result, the first rotating member 123 is obtained.

Specifically, as illustrated in FIGS. 8A to 8C, the first arc-shaped surface 1231a is formed within an area extending from oneendoftheabove-describedhalvedcylindricalarc-shapedmember along the x-axis to a line separated therefrom by a distance α 1. In the first arc-shaped surface 1231a, the ends of the arc correspond to those of the diameter. Here, the diameter of the arc is substantially φ2.

Also, the second arc-shaped surface 1232a is formed within an area extending from the above-stated area whose width is α 1 to a line separated therefrom by a distance (δ-(α1+α2)) along the x-axis. In the second arc-shaped surface 1232a, the ends of the arc correspond to the ends of the diameter whose length is α4.

Also, the third arc-shaped surface 1233a is formed within an area extending from another end face of the above-described halved cylindrical arc-shaped member along the x-axis to a line separated therefrom by a distance α2. In the third arc-shaped surface 1233a, the ends of the arc correspond to the diameter whose length is φ2.

Furthermore, the same central axis C2 (noted in the foregoing, see FIG. 6B) is shared among the above-stated first to third arc-shaped surfaces 1231a to 1233a.

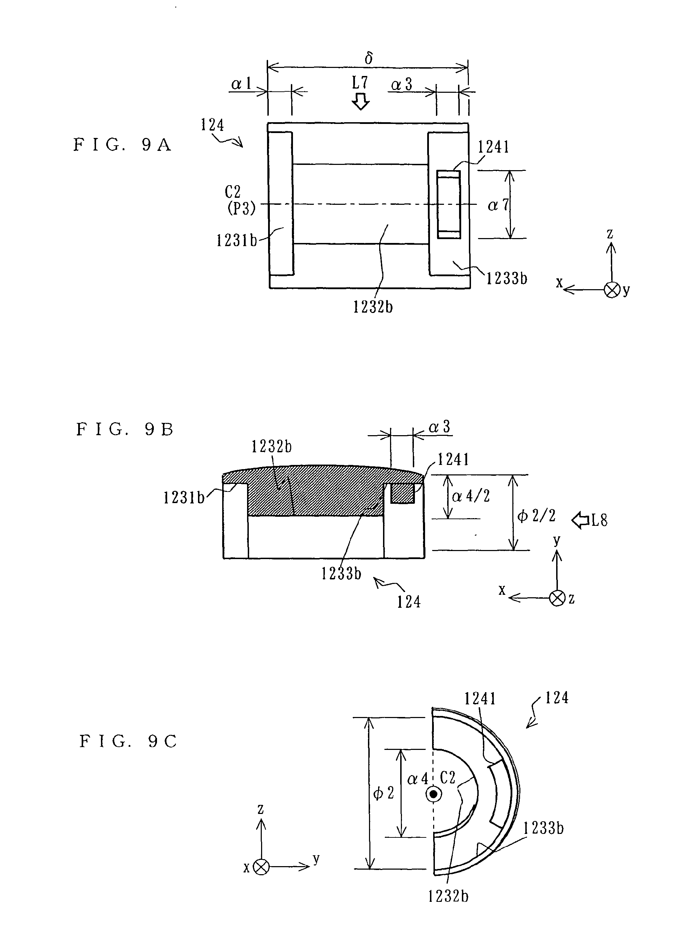

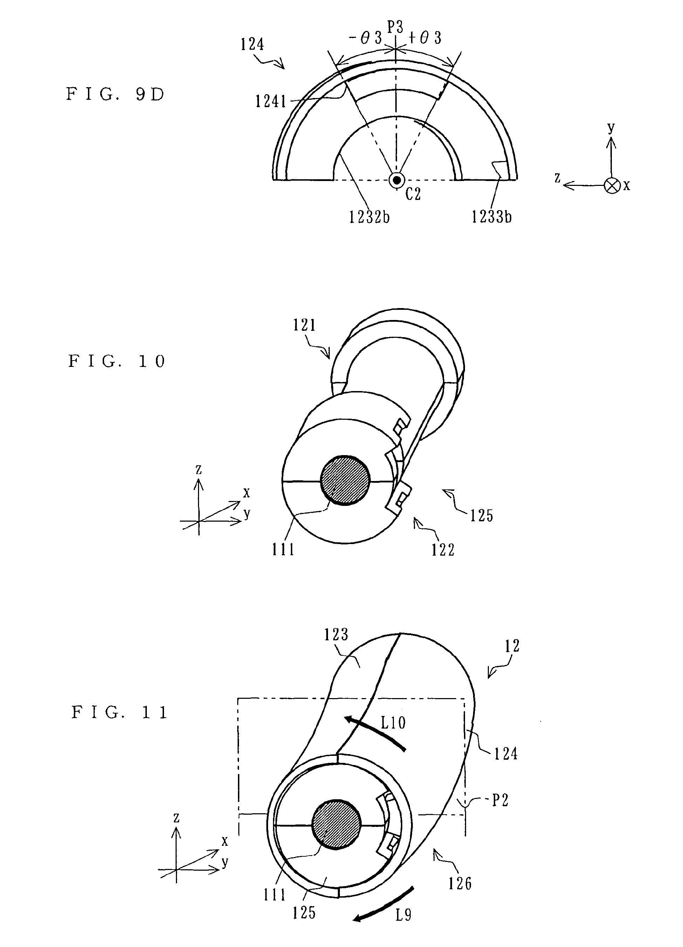

FIG. 9A is a side view of the second rotating member 124 as illustrated in FIG. 4. FIG. 9B is a cross-sectional view of the second rotating member 124 taken along a plane P3 parallel to the xy plane including the central axis C2 as illustrated in FIG. 9A and seen from an arrow L7 as illustrated in FIG. 9A. FIG. 9Cisanelevational view of the second rotating member 124 seen from the direction of an arrow L8 as illustrated in FIG. 9B. In FIGS. 9A to 9C, the second rotating member 124 is obtained by processing another halved cylindrical arc-shaped member of the above-described halved cylindrical arc-shaped members. Specifically, the second rotating member 124 has a first arc-shaped surface 1231b, a second arc-shaped surface 1232b, and a third arc-shaped surface 1233b formed thereon, which are symmetric to the respective foregoing first arc-shaped surface 1231a, second arc-shaped surface 1232a, and third arc-shaped surface 1233a with respect to the zx plane.

Also, the second rotating member 124 further includes a protruding member 1241 protruding from the third arc-shaped surface 1233b. Here, FIG. 9D is an enlarged view of an area including the protruding member 1241 as illustrated in FIG. 9C. In FIGS. 9A to 9D, in general, the protruding member 1241 is an arc-shaped member preferably protruding perpendicularly from the third arc-shaped surface 1233b. The width of the above-described protruding member 1241 is α3, and the outer and inner diameters thereof from the central axis C2 are φ2/2 and φ3, respectively. Here, φ3 is at least smaller than φ2 and greater than φ1. However, as will be described below, the protruding member 1241 depresses either the elastic member 1218a or the elastic member 1218b with the rotation of the first rotating member 123 and the second rotating member 124, and the elastic member 1218a and the elastic member 1218b depress the switch 1217a and the switch 1217b, respectively. Thus, a value of φ3 is selected so that the switch 1217a and the switch 1217b are not depressed when the first rotating member 123 and the second rotating member 124 are located at the initial position.

Also, as illustrated in FIG. 9D in particular, the protruding member 1241 has a symmetrical shape with respect to the plane P3. One rectangular end face thereof is included in a plane generated as a result of a rotation of the plane P3 an angle +θ3 degrees about the central axis C2. Similarly, another end face of the protruding member 1241 is included in a plane generated as a result of a rotation of the plane P3 an angle - θ3 degrees. Here, a value of θ3 is selected so as to be greater than at least an angle of 0 degrees and smaller than an angle of θ1 degrees. More specifically, a value of θ3 is selected so that the switch 1217a and the switch 1217b are not depressed when the first rotating member 123 and the second rotating member 124 are located at the initial position.

The first supporting member 121, the second supporting member 122, the first rotating member 123, and the second rotating member 124, whose structures have been described above, are assembled as follows: First, as illustrated in FIG. 4, a portion of the core 111 exposed at the mounting space 113 is sandwiched between the recess 1216a of the first supporting member 121 and the recess 1216b of the second supporting member 122, and the first supporting member 121 and the second supporting member 122 are fixed to each other, with the ends thereof being aligned. Here, in order to fix the first supporting member 121 and the second supporting member 122 while maintaining proper alignment of their sides, it is preferable that at least two bosses (not shown) be formed on either side. In this case, another side has two holes, each of which is appropriately shaped and located corresponding to each boss. Thus, by inserting each boss into the corresponding hole, it is possible to perform proper and easy alignment of the sides of the first supporting member 121 and the second supporting member 122.

As illustrated in FIG. 10, a member composed of the first supporting member 121 and the second supporting member 122 fixed to each other as described above is referred to as a supporting section 125. The supporting section 125 does not rotate about the core 111 since the core 111 has a ring shape. Also, as illustrated in FIG. 10, the supporting section 125 has a cylindrical surface composed of the outer surfaces of the main units 1211a and 1211b.

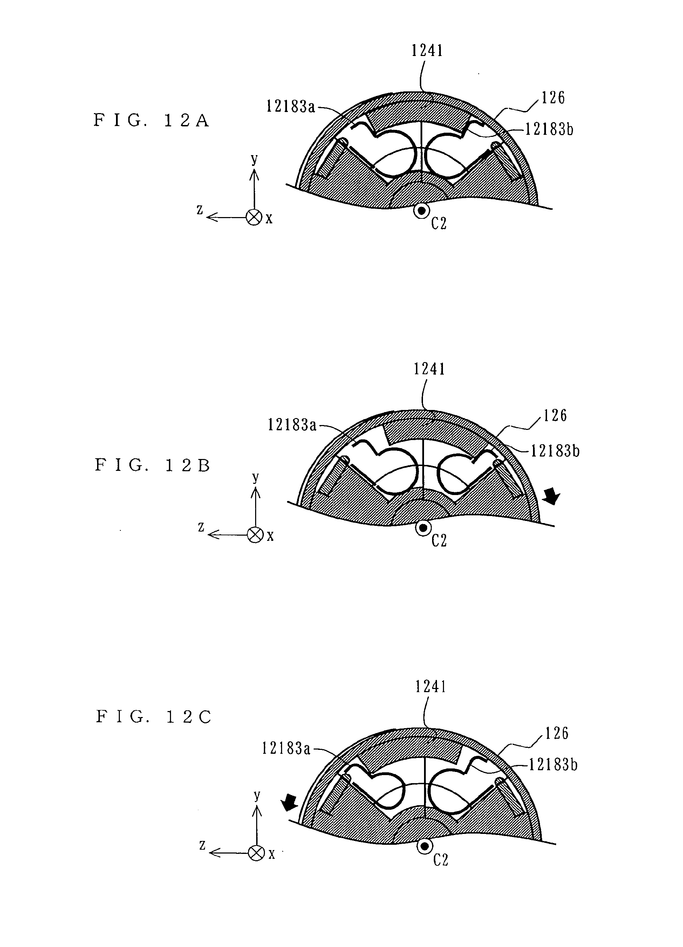

As illustrated in FIG. 11, the above-described cylindrical surface is sandwiched between the second arc-shaped surface 1232a of the first rotating member 123 and the second arc-shaped surface 1232b of the second rotating member 124, and the first rotating member 123 and the second rotating member 124 are fixed to each other, with the upper end of the first rotating member 123 and the lower end of the second rotating member 124 being aligned. Here, in order to fix the first rotating member 123 and the second rotating member 124 while maintaining proper alignment of the upper end of the former and the lower end of the latter, it is preferable that at least two bosses (not shown) be formed on either the upper end or the lower end. In this case, another end has two holes, each of which is appropriately shaped and located corresponding to each boss. Thus, by inserting each boss into the corresponding hole, it is possible to perform proper and easy alignment of the upper end of the first rotating member 123 and the lower end of the second rotating member 124.

As illustrated in FIG. 11, a member composed of the first rotating member 123 and the second rotating member 124 fixed to each other as described above is referred to as a rotating section 126. Here, the rotating section 126 has a cylindrical surface composed of the second arc-shaped surfaces 1232a and 1232b. The rotating section 126 is capable of rotating about the central axis C2 of the supporting section 125 since the cylindrical surface of the rotating section 126 and the cylindrical surface of the supporting section 125 have substantially the same diameter α 4. In order to facilitate the rotation of the rotating section 126, it is preferable that at least the cylindrical surfaces of the rotating section 126 and the supporting section 125 be made of resin having low coefficient of friction.

In the controller 12 structured as described above, the first rib 1212a and the first rib 1212b function as a stopper for preventing a position of the rotating section 126 from being shifted to a normal direction of the x-axis. Also, the second rib 1213a and the second rib 1213b prevent a position of the rotating section 126 from being shifted to a negative direction of the x-axis. Therefore, the rotating section 126 merely rotates in the direction of either an arrow L9 or an arrow L10 about the central axis C2. Hereinafter, the direction of the arrow L9 is referred to as a normal direction, whereas the direction of the arrow L10 is referred to as a reverse direction.

Here, FIGS. 12A to 12C are cross-sectional views each illustrating a partial cross section of the controller 12 taken along a plane P2 as illustrated in FIG. 11. In FIG. 12A, when a force in the rotation direction is not exerted on the rotating section 126, both sides of the protruding member 1241 are included in a plane obtained by rotating the plane P3 an angle of ± θ3 degrees (see FIG. 9D), and the connection sections 12183a and 12183b are included in a plane obtained by rotating a side of the main unit 1211a an angle of θ3 degrees (see FIG. 6A). Therefore, when a force in the rotation direction is not exerted on the rotating section 126, the protruding member 1241 is sandwiched and secured between the connection sections 12183a and 12183b. Hereinafter, such a stationary position of the rotating section 126 is referred to as a neutral position . Therefore, it is evident that the elastic members 1218a and 1218b have the function of locking the rotating section 126 in the neutral position.

Under the above conditions , if the driver rotates the rotating section 126 in the normal direction as indicated by the allow L9 of FIG. 11, the protruding member 1241 bends the elastic member 1218b, as illustrated in FIG. 12B, and the tip of the elastic member 1218b depresses the button of the switch 1217b. As a result, the switch 1217b outputs a signal. Also, the reaction force produced as soon as the button is depressed causes a force in the reverse direction to be exerted on a hand of the driver. Thus, the driver can sense that the button is depressed.

Here, the greater force in the reverse direction is produced, the more clearly the driver can sense that the button is depressed. In order to augment the driver's sense, it is preferable that the protruding member 1241 and the second rib 1213b be structured so that a portion of the end of the protruding member 1241 hits a portion of the end of the second rib 1213b as soon as the switch 1217b is depressed.

On the other hand, if the driver rotates the rotating section 126 in the reverse direction as indicated by the arrow L10 of FIG. 11, the tip of the elastic member 1218a depresses the button of the switch 1217a. As a result, a signal is outputted from the switch 1217a. Also, as soon as the button is depressed, a force in the normal direction is exerted on the hand of the driver. Thus, the driver can sense that the button is depressed.

Here, in order to produce a greater force in the normal direction, it is preferable that the protruding member 1241 and the second rib 1213a be structured so that a portion of the end of the protruding member 1241 hits a portion of the end of the second rib 1213a as soon as the switch 1217a is depressed.

Also, it is preferable that a value of a rotational torque of the rotating section 126 be set so that the rotating section 126 does not rotate while steering of the wheel section 11 is performed and that the driver is allowed to operate the rotating section 126 smoothly. One example of such a value is 0.15N·m. However, in fact, characteristics of a power steering system differ in each vehicle. Thus, a value of a rotational torque is set to an appropriate value for each vehicle.

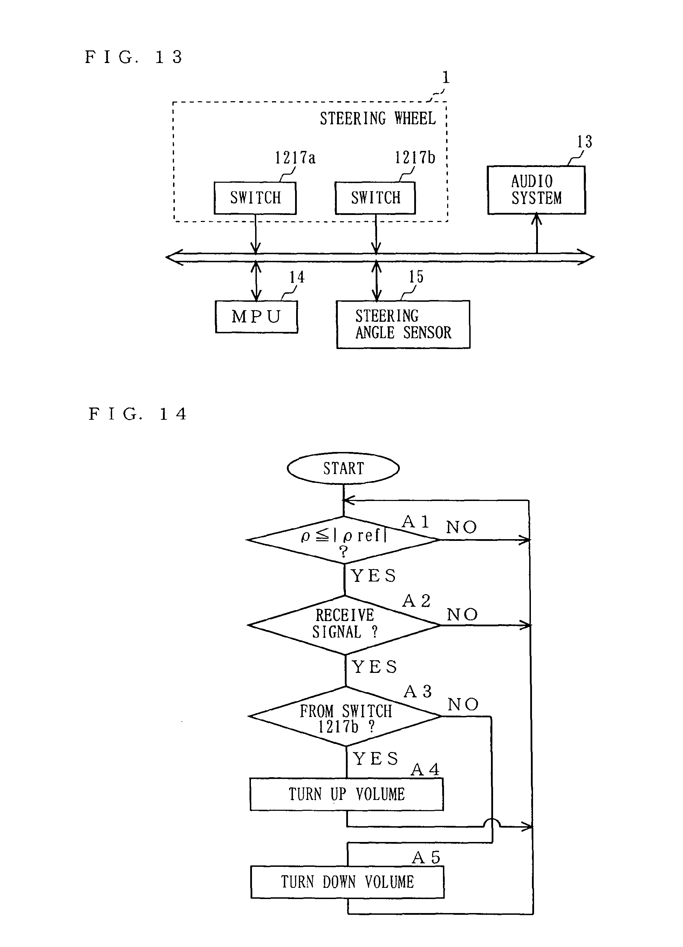

The above-described steering wheel 1 is applied to adjustment of a volume of an audio system 13 as illustrated in FIG. 13. Here, FIG. 13 is a block diagram illustrating the structure of a volume adjusting system to which the steering wheel 1 is applied. In FIG. 13, the volume adjusting system includes at least an MPU 14 and a steering angle sensor 15 as well as the steering wheel 1 and the audio system 13. The above-stated steering wheel 1, audio system 13, MPU 14, and steering angle sensor 15 are communicably connected to each other by a bus.

The MPU 14 operates in accordance with a software program, which is not shown, and adjusts a volume of the audio system 13. Also, the steering angle sensor 15 detects a steering angle ρ of the vehicle at regular intervals, and transmits the detected steering angle ρ to the MPU 14. The steering angle ρ is an angle at which the wheel section 11 of the steering wheel 1 rotates with respect to an initial position. The initial position may be selected arbitrarily, but it is preferable that the position be located at a position of the wheel section 11 if the wheel section 11 of the vehicle is not turned, that is, if the vehicle is traveling in a straight line.

FIG. 14 is a flowchart showing an operation of the MPU 14 in the above-stated volume adjusting system. In FIG. 14, the MPU 14 receives a steering angle ρ from the steering angle sensor 15, and determines whether or not the current steering angle ρ satisfies ρ = |ρref| (step A1). Here, ρ ref is a steering angle of the wheel section 11 at which the driver can safely operate the controller 12. Here, most drivers do not re-grip the wheel section 11 while the steering angle ρ is within a range of an angle of ±30 degrees. Further, within the above-stated angle range, the controller 12 does not shift to a position at which an operation is impossible. In view of this, an angle of 30 degrees is selected as a preferable value for ρ ref.

In the case where it is determined NO at step A1, the driver turns the wheel section 11 to a large degree. That is, in this case, the driver changes a position at which he/she grips the wheel section 11, and the driver may touch the controller 12. As a result, even if the setting of the rotational torque is established as described above, the rotating section 126 of the controller 12 may rotate without the driver's intent. In this case, a signal may be inputted from either the switch 1217a or 1217b. It is not recommended to adjust the volume while the wheel section 11 is turned to a large degree since such volume adjustment can distract the driver and affect his/her ability to drive safely. Therefore, in the case where it is determined No at step A1, the MPU 14 goes back to step A1.

On the other hand, in the case where it is determined YES at step A1, the MPU 14 waits for a signal from either the switch 1217a or 1217b for a predetermined time period since the volume can be adjusted safely (step A2).

In the case where a signal is not received in a predetermined time period at step A2, the MPU 14 goes back to step A1 because the steering angle ρ of the wheel section 11 may change if the MPU 14 waits for a signal to arrive for too long a time.

Now, when a user desires to adjust the volume of the audio system 13, he/she rotates the rotating section 126 in the normal or reverse direction as described above referring to FIG. 11. In response to this rotation, a signal is outputted from either the switch 1217a or 1217b. When a signal is received at step A2, the MPU 14 determines whether or not the currently-received signal is transmitted from the switch 1217b (step A3).

In the case where it is determined YES at step A3, the MPU 14 turns up the volume of the audio system 13 (step A4). In this case, the MPU 14 preferably continues to turn up the volume of the audio system 13 during a duration of time from the rising edge of the signal to the falling edge thereof (i.e., a pulse width).

Also, in the case where it is determined NO at step A3, the MPU 14 turns down the volume of the audio system 13, contrary to step A4, since a signal is transmitted from the switch 1217a (step A5). Also in this case, it is preferable that the volume of the audio system 13 be continuously turned down within the pulse width.

When either the above-stated step A4 or A5 is completed, the MPU 14 goes back to step A1.

As described above, based on the steering wheel 1 according to the present embodiment, the rotating section 126 is structured so as to be capable of rotating about the central axis C2 within a predetermined area, and the protruding member 1241 depresses the buttons of the switches 1217a and 1218b when the user rotates the rotating section 126. As such, the rotating section 126 is capable of rotating within a predetermined area. Thus, the user can easily sense the extent to which the rotating section 126 should be rotated to depress the switch 1217a and switch 1217b. Thus, it is possible to provide the steering wheel 1 provided with the controller 12 capable of controlling the vehicle-mounted device more easily.

Also, the rotating section 126 and the outer covering 112 have substantially the same diameter. Thus, the driver operates the rotating section 126 with his/her palm and wrist, which are less sensitive than a fingertip, rather than his/her fingertip. As a result, even if the driver operates the controller 12 while driving, the driver is not distracted by the controller 12.

Note that, in the rotating section 126, it is preferable that a surface gripped by the driver be colored with a color different from that of the outer covering 112, and that the surface gripped by the driver be wrapped by a material different from that of the outer covering 112. Typically, the surface is made of leather, rubber, or urethane, for example. Also, it is further preferable that a large number of small holes be formed on the surface material. Also, it is still further preferable that the rotating section 126 itself be made of a material different from that of the outer covering 112. With this, the driver can easily view or feel a position of the controller 12. Furthermore, it is possible to make the steering wheel 1 more fashionable.

Also, in the above-described embodiment, for the sake of convenience, it is assumed that the wheel section 11 is a substantially circular ring whose cross section is circular. Therefore, it is also assumed that the controller 12 is cylindrical arc-shaped whose cross section is circular, but it is not limited thereto. The outer diameter of the controller 12 may be arbitrarily shaped. As stated above, in general, the wheel section 11 has an outer shape allowing the driver to easily grip it. Thus, preferably, the controller 12 has an outer shape corresponding to the wheel section 11. Also, a shape of the cross section of the core 111 is not limited to a circle, and it may have an arbitrary shape.

Also, in the above-described embodiment, a case in which the controller 12 is applied to adjustment of the volume of the audio system 13, which is one example of the vehicle-mounted device, has been described. However, it is not limited thereto. The controller 12 may be applied to on/off of a mute function of the audio system 13. Further, the controller 12 may be applied to setting of a reception channel of the audio system 13. Still further, the controller 12 may be applied to scrolling of a display map of a navigation device, adjustment of temperature or a wind direction of an air conditioner, or volume adjustment or channel change of a television receiver.

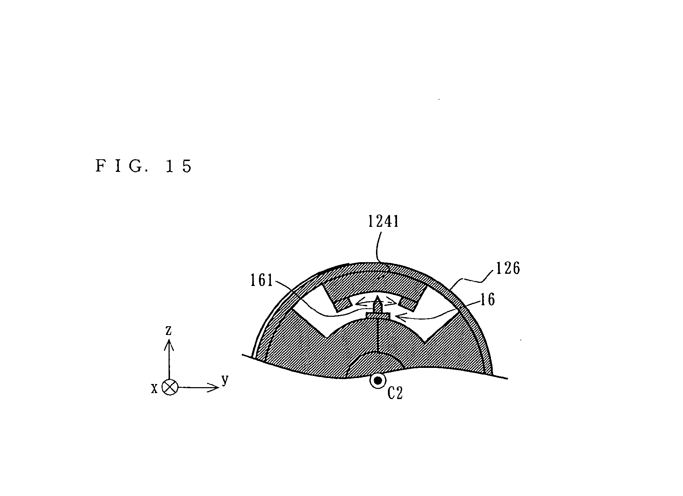

Also, in the above-described embodiment, the controller 12 has two switches 1217a and 1217b. However, it is not limited thereto, and the number of switches may be one. Alternatively, as illustrated in FIG. 15, the controller 12 may have a detector switch 16 tilting in two directions. The detector switch 16 includes a stick 161, which is structured so as to tilt from side to side, tilting to the left or right in accordance with a rotation of the rotating section 126. In response to the tilting movement, the detector switch 16 outputs a signal identifying a direction in which it is tilted.

While the invention has been described in detail, the foregoing description is in all aspects illustrative and not restrictive. It is understood that numerous other modifications and variations can be devised without departing from the scope of the invention.

### INDUSTRIAL APPLICABILITY

The steering wheel according to the present invention is provided with a controller enabling easier operation of a vehicle-mounted device, and can be used in a vehicle or a game device, for example.

## Claims

1. A steering wheel, comprising:
a wheel section; and
a controller mounted on the wheel section for controlling a predetermined device, wherein
the controller includes:
a rotating section operable to rotate about a predetermined rotational axis; and
at least one switch for outputting a signal in response to a rotation of the rotating section.

2. The steering wheel according to claim 1, wherein the controller is mounted between at least a right or left end of the wheel section and an upper end thereof.

3. The steering wheel according to claim 1, wherein the rotating section is operable to rotate about the predetermined rotational axis within a range from a first angle to a second angle.

4. The steering wheel according to claim 1, wherein the rotating section is operable to rotate about the predetermined rotational axis from a predetermined reference position in two directions.

5. The steering wheel according to claim 1, wherein
the controller further includes a supporting section being fixed to the wheel section,
the supporting section includes a cylindrical outer surface, a central axis thereof coincides with the predetermined rotational axis, and
the rotating section includes a cylindrical inner surface having substantially a same diameter as that of the cylindrical outer surface of the supporting section and sliding on the cylindrical outer surface of the supporting section.
